# EUROPEAN PATENT APPLICATION

(11) **EP 4 807 878 A1**
(43) Date of publication of application: **16.09.2026**
(21) Application number: 24887551.0
(22) Date of filing: 19.08.2024
(51) Int. Cl.: H01M 50/30

(54) **BATTERY PACK**

(30) Priority: 10.11.2023 CN 202323072651 U
(71) Applicant: Sungrow Power Supply Co., Ltd., Hefei, Anhui 230088 (CN)
(72) Inventor: ZHOU, Jianjie, Hefei, Anhui 230088 (CN); CAO, Wei, Hefei, Anhui 230088 (CN); GUO, Jian, Hefei, Anhui 230088 (CN)
(74) Representative: Zacco Norway AS
(86) International application number: PCT/CN2024/113046
(87) International publication number: WO 2025/097931

(57) **Abstract**

A battery pack, which comprises: a housing (10) having an accommodating space (11) and a pressure relief space (12); and a cell assembly (20) and a sealing assembly (30), wherein the cell assembly (20) is located in the accommodating space (11); the sealing assembly (30) seals a gap between the cell assembly (20) and the housing (10) and also seals a gap between one side of a pressure relief valve in the cell assembly (20) and the pressure relief space (12); the cell assembly (20) isolates the accommodating space (11) from the pressure relief space (12); and the pressure relief space (12) is configured to discharge a combustible gas and a high-temperature electrolyte generated by the cell assembly (20) during thermal runaway, thereby effectively preventing the combustible gas and the high-temperature electrolyte from entering the interior of the cell assembly (20) and causing damage to the cell assembly (20), and solving the problem in the prior art whereby battery packs are unable to discharge the combustible gas and the high-temperature electrolyte in a timely manner when undergoing thermal runaway.

## Description

The present application claims the priority of the Chinese Patent Application No. 202323072651.5, titled "BATTERY PACK", filed on November 10, 2023 with the China National Intellectual Property Administration, which is incorporated herein by reference in its entirety.

### FIELD

The present application relates to the technical field of battery, and in particular to a battery pack.

### BACKGROUND

At present, the conventional battery pack used in energy storage systems includes a lower case body and a case cover, which are fastened together by bolts around the perimeter to form an independent space. The battery cells, as the smallest energy storage unit modules, are all arranged within this independent space. When the thermal runaway occurs on a certain battery cell in the battery pack system, this battery cell will spray a large amount of combustible gas and high-temperature electrolyte to the interior of the battery pack through its pressure relief valve. The sprayed high-temperature electrolyte may spread inside the battery pack, contaminating other cells, which causes thermal runaway in more battery cells and thereby endangering personnel safety.

### SUMMARY

A battery pack is provided in the present application, to address the issue in the related technologies that the combustible gas and high-temperature electrolyte cannot be timely discharged during thermal runaway of the battery pack.-

In order to address the issue above, a battery pack is provided in the present application, which includes: a housing having an accommodating space and a pressure relief space, a battery cell module, and a sealing assembly. The battery cell module is located inside the accommodating space, and the sealing assembly seals a gap between the battery cell module and the housing and a gap between a side of the battery cell module provided with a pressure relief valve and the pressure relief space. The accommodating space is isolated from the pressure relief space by the battery cell module. The pressure relief space is configured for discharging a combustible gas and a high-temperature electrolyte generated by the battery cell module during thermal runaway.

Further, the pressure relief space includes a first pressure relief passage and a second pressure relief passage, the first pressure relief passage is formed between one side of the battery cell module and an inner side of a side wall at one side of the housing, and the second pressure relief passage is formed between the other side of the battery cell module and an inner side of a side wall at another side of the housing. The first pressure relief passage and the second pressure relief passage are both configured for discharging the combustible gas and the high-temperature electrolyte generated by the battery cell module during the thermal runaway.

Further, the two side walls of the housing opposite to each other and are provided with a first pressure relief hole and a second pressure relief hole, respectively, the first pressure relief hole is in communication with the first pressure relief passage, and the second pressure relief hole is in communication with the second pressure relief passage. The first pressure relief hole and the second pressure relief hole are both configured for discharging the combustible gas generated by the battery cell module.

Further, the housing includes a first drainage hole and a second drainage hole, which are both provided at a bottom of the housing. The first drainage hole is in communication with the first pressure relief passage, the second drainage hole is in communication with the second pressure relief passage, and the first drainage hole and the second drainage hole are both configured for discharging the high-temperature electrolyte generated by the battery cell module.

Further, a housing pressure relief valve is arranged at each of the first pressure relief hole and the second pressure relief hole, and a drainage valve is arranged at each of the first drainage hole and the second drainage hole.

Further, the battery cell module includes multiple cell bodies arranged side by side in sequence, and the sealing assembly includes first sealing structures and second sealing structures. Two ends of each of the multiple cell bodies are provided with the corresponding first sealing structure and the corresponding second sealing structure spaced apart and respectively, and the first sealing structure and the second sealing structure are located between two adjacent cell bodies. The first sealing structures are configured for sealing between the multiple cell bodies and the first pressure relief passage, to isolate one side of the multiple cell bodies from the first pressure relief passage; and the second sealing structures are configured for sealing between the multiple cell bodies and the second pressure relief passage, to isolate another side of the multiple cell bodies from the second pressure relief passage.

Further, each of the first sealing structures includes a first spacer and a second spacer which are spaced apart, and each of the second sealing structures includes a third spacer and a fourth spacer which are spaced apart. A first filling passage is defined by the first spacer, the second spacer, and two adjacent cell bodies, and a second filling passage is defined by the third spacer, the fourth spacer, and the two adjacent cell bodies. The first filling passage is filled with a sealant for sealing between the two adjacent cell bodies and the first pressure relief passage, and the second filling passage is filled with a sealant for sealing between the two adjacent cell bodies and the second pressure relief passage.

Further, the battery cell module includes multiple cell bodies arranged side by side in sequence, multiple cell slots are provided in a cavity of the housing, and the multiple cell slots are arranged side by side. The multiple cell bodies are arranged in the multiple cell slots, and the multiple cell bodies are in one-to-one correspondence with the multiple cell slots.

Further, the housing includes a case body and a case cover connected with each other. The sealing assembly includes a sealing frame, a first sealing strip, and a second sealing strip. The first sealing strip and the second sealing strip are arranged on the sealing frame and are spaced apart from each other, and the first sealing strip and the second sealing strip are connected to two ends of the battery cell module respectively. One end of the sealing frame is connected to the case body, and the other end of the sealing frame is connected to the case cover. The first sealing strip is configured for sealing between one side of the battery cell module and the case cover, the second sealing strip is configured for sealing between the other side of the battery cell module and the case cover, and the sealing frame is configured for sealing between the case cover and the case body.

Further, the battery pack further includes a firefighting interface provided on the housing. The firefighting interface is in communication with the accommodating space, and the firefighting interface is configured for cooling the battery cell module.

Further, the housing includes a case body and a case cover connected with each other. The battery pack further includes a first cell restraint bar and a second cell restraint bar, the one side of the battery cell module and the case body are both connected to the first cell restraint bar, and the first cell restraint bar presses against the one side of the battery cell module. The another side of the battery cell module and the case body are both connected to the second cell restraint bar, and the second cell restraint bar presses against the another side of the battery cell module.

Further, the housing further includes a first baffle and a second baffle, which are provided on the case body and are space apart from each other. The first cell restraint bar is connected to the first baffle, and the second cell restraint bar is connected to the second baffle. The first pressure relief passage is defined by the one side of the battery cell module, the first baffle, and an inner side of a side wall at one side of the case body, and the second pressure relief passage is defined by the another side of the battery cell module, the second baffle, and an inner side of a side wall at another side of the case body.

A battery pack is provided according to the technical solution of the present application, which includes: a housing having an accommodating space and a pressure relief space, a battery cell module, and a sealing assembly. The battery cell module is located inside the accommodating space, and the sealing assembly seals a gap between the battery cell module and the housing and a gap between the side of the battery cell module provided with the pressure relief valve and the pressure relief space. The accommodating space is isolated from the pressure relief space by the battery cell module. The pressure relief space is used for discharging the combustible gas and the high-temperature electrolyte generated by the battery cell module when a thermal runaway occurs. With this solution, the pressure relief space is provided, and the sealing assembly is provided to seal the battery cell module in the housing, and thus the accommodating space can be isolated from the pressure relief space by the battery cell module. As such, the combustible gas and the high-temperature electrolyte generated by the battery cell module when the thermal runaway occurs can be timely discharged through the pressure relief space, which effectively prevents the combustible gas and the high-temperature electrolyte from entering the accommodating space and causing damage to the battery cell module. Further, the sealing assembly is provided, which can seal the gaps between the housing and the battery cell module at two opposite ends thereof, respectively, and seal the gap between the side of the battery cell module where the pressure relief valve is arranged and the pressure relief space, thereby improving the sealing performance of the accommodating space and the pressure relief space. With this solution, the issue in the related technologies that the combustible gas and the high-temperature electrolyte cannot be timely discharged during thermal runaway in the battery pack can be effectively addressed.

### BRIEF DESCRIPTION OF THE DRAWINGS

The accompanying drawings of the specification, which constitute a part of the present application, are used to provide a further explanation of the present application. The illustrative embodiments of the present application and their explanations are used to explain the present application and cannot be regarded as an improper limitation of the present application.

In the figures:
FIG. 1 is an exploded view of a battery pack according to an embodiment of the present application;
FIG. 2 is a schematic view showing the structure of a case body in FIG. 1;
FIG. 3 is a top view of part of the battery pack in FIG. 1;
FIG. 4 is a side view of the battery pack in FIG. 1;
FIG. 5 is a schematic structural view of a cell body, a first sealing structure, and a second sealing structure in FIG. 1;
FIG. 6 is a schematic view showing the structure of part of the battery pack in FIG. 1; and
FIG. 7 is a schematic view showing the structure of the battery pack in FIG. 1.

Numeral references in the above figures are listed below:

| | | | |
|---|---|---|---|
| 10 | housing, | 11 | accommodating space, |
| 12 | pressure relief space, | 121 | first pressure relief passage, |
| 122 | second pressure relief passage, | 13 | first drainage hole, |
| 14 | second drainage hole, | 15 | housing pressure relief valve, |
| 16 | cell slot, | 17 | first baffle, |
| 18 | second baffle, | | |
| 20 | battery cell module, | 21 | cell body, |
| 30 | sealing assembly, | 31 | sealing frame, |
| 32 | first sealing strip, | 33 | second sealing strip, |
| 34 | first sealing structure, | 341 | first spacer, |
| 342 | second spacer, | 35 | second sealing structure, |
| 351 | third spacer, | 352 | fourth spacer, |
| 40 | case cover, | 41 | case body, |
| 50 | firefighting interface, | | |
| 61 | first cell restraint bar, | 62 | second cell restraint bar, |
| 63 | liquid cooling plate. | | |

### DETAILED DESCRIPTION OF THE EMBODIMENTS

Technical solutions according to the embodiments of the present application will be described clearly and completely as follows in conjunction with the accompany drawings in the embodiments of the present application. It is obvious that the described embodiments are only a part of the embodiments according to the present application, rather than all of the embodiments. The following description of at least one exemplary embodiment is merely illustrative and should not be construed as any limitation on this application and its application or use. All the other embodiments obtained by those skilled in the art based on the embodiments in the present application without any creative work belong to the scope of protection of the present application.

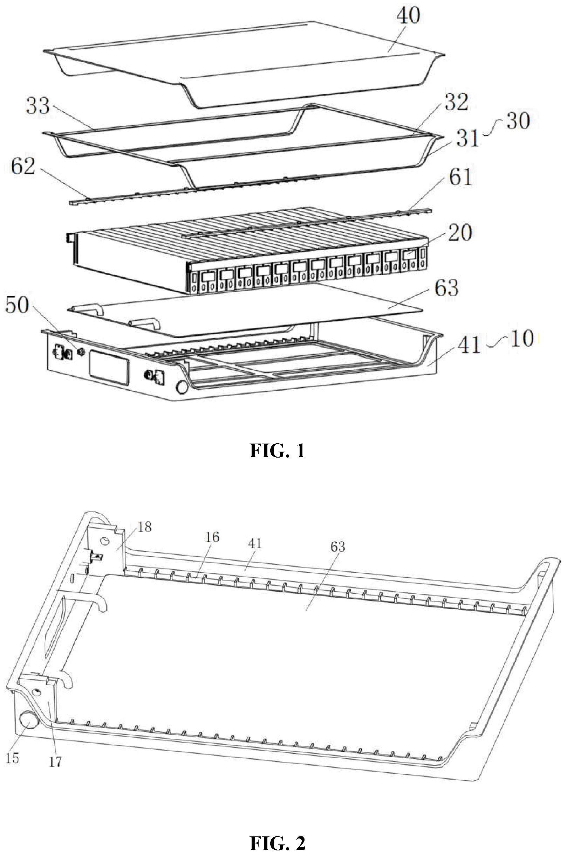

As shown in FIGS. 1 to 7, a battery pack is provided according to the embodiment of the present application, which includes: a housing 10 having an accommodating space 11 and a pressure relief space 12, a battery cell module 20, and a sealing assembly 30. The battery cell module 20 is located inside the accommodating space 11, and the sealing assembly 30 seals a gap between the battery cell module 20 and the housing 10 and a gap between a side of the battery cell module 20 provided with a pressure relief valve and the pressure relief space 12. The accommodating space 11 is isolated from the pressure relief space 12 by the battery cell module 20. The pressure relief space 12 is used for discharging a combustible gas and a high-temperature electrolyte generated by the battery cell module 20 when the thermal runaway occurs.

With this solution, the pressure relief space 12 is provided, and the sealing assembly 30 is provided to seal the battery cell module 20 in the housing 10, and thus the accommodating space 11 can be isolated from the pressure relief space 12 by the battery cell module 20. As such, the combustible gas and the high-temperature electrolyte generated by the battery cell module 20 during thermal runaway can be discharged through the pressure relief space 12, which effectively prevents the combustible gas and the high-temperature electrolyte from entering the accommodating space 11 and causing damage to the battery cell module 20. Further, the sealing assembly 30 is provided, which can seal the gaps between the housing 10 and the battery cell module 20 at two opposite ends thereof, respectively, and seal the gap between the side of the battery cell module 20 where the pressure relief valve is arranged and the pressure relief space 12, thereby improving the sealing performance of the accommodating space 11 and the pressure relief space 12. With this solution, the issue in the related technologies that the combustible gas and the high-temperature electrolyte cannot be timely discharged during thermal runaway in the battery pack can be effectively addressed.

The pressure relief space 12 includes a first pressure relief passage 121 and a second pressure relief passage 122. The first pressure relief passage 121 is formed between one side of the battery cell module 20 and an inner side of a side wall at one side of the housing 10, and the second pressure relief passage 122 is formed between the other side of the battery cell module 20 and an inner side of a side wall of at the other side of the housing 10. The first pressure relief passage 121 and the second pressure relief passage 122 are both used for discharging the combustible gas and the high-temperature electrolyte generated by the battery cell module 20 when the thermal runaway occurs.

With this arrangement, the combustible gas and the high-temperature electrolyte generated by the battery cell module 20 during thermal runaway can be timely discharged through the first pressure relief passage 121 and the second pressure relief passage 122, which improves the safety of the battery pack.

The two opposite side walls of the housing 10 are provided with a first pressure relief hole and a second pressure relief hole, respectively. The first pressure relief hole is in communication with the first pressure relief passage 121, and the second pressure relief hole is in communication with the second pressure relief passage 122. The first pressure relief hole and the second pressure relief hole are both used for discharging the combustible gas generated by the battery cell module 20.

With this arrangement, the first pressure relief hole and the second pressure relief hole are provided on the two side walls of the housing 10, respectively, which facilitates timely discharge of the combustible gas generated by the battery cell module 20, thereby preventing the combustible gas from entering the interior of the battery cell module 20 and causing damage to the battery cell module 20.

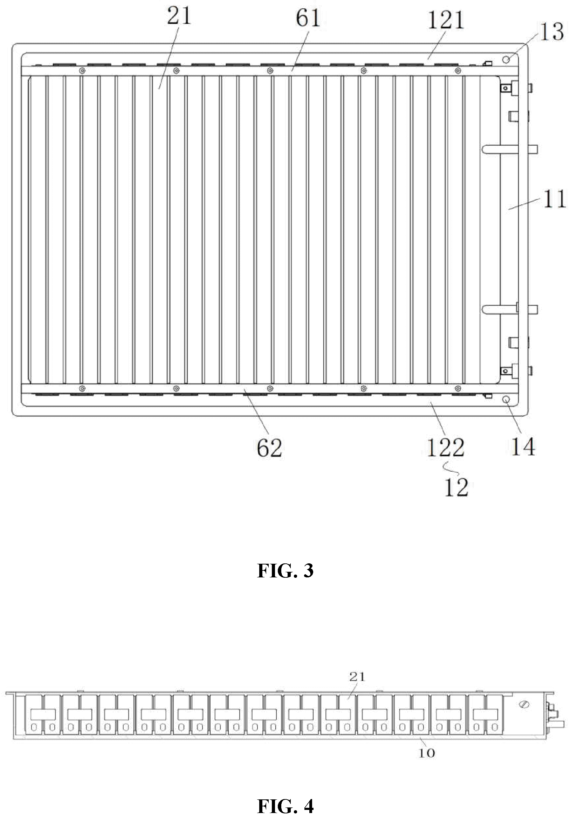

As shown in FIGS. 1 and 3, in this embodiment, the housing 10 is provided with a first drainage hole 13 and a second drainage hole 14, both of which are located at a bottom of the housing 10. The first drainage hole 13 is in communication with the first pressure relief passage 121, and the second drainage hole 14 is in communication with the second pressure relief passage 122. The first drainage hole 13 and the second drainage hole 14 are both used for discharging the high-temperature electrolyte generated by the battery cell module 20.

With this arrangement, the first drainage hole 13 and the second drainage hole 14 are both provided at the bottom of the housing 10, so that the high-temperature electrolyte generated by the battery cell module 20 can be timely discharged through the first drainage hole 13 and the second drainage hole 14, which prevents the high-temperature electrolyte from entering the interior of the battery cell module 20 and causing damage to the battery cell module 20.

The first pressure relief hole and the second pressure relief hole are each provided with a housing pressure relief valve 15, and the first drainage hole 13 and the second drainage hole 14 are each provided with a drainage valve.

The first pressure relief hole and the second pressure relief hole are each provided with the housing pressure relief valve 15. In this way, when the pressure in the first pressure relief passage 121 or the second pressure relief passage 122 reaches the preset value, the housing pressure relief valve 15 open automatically to timely discharge the combustible gas out of the first pressure relief passage 121 or the second pressure relief passage 122. Similarly, the first drainage hole 13 and the second drainage hole 14 are each provided with the drainage valve, which facilitates discharging the high-temperature electrolyte out of the first pressure relief passage 121 or the second pressure relief passage 122.

In this embodiment, the battery cell module 20 includes multiple cell bodies 21 arranged side by side in sequence, and the sealing assembly 30 includes first sealing structures 34 and second sealing structures 35. Two ends of each of the multiple cell bodies are provided with the corresponding first sealing structure 34 and the corresponding second sealing structure 35 spaced apart and respectively, and the first sealing structure 34 and the second sealing structure 35 are located between two adjacent cell bodies 21. The first sealing structures 34 are used for sealing between the cell bodies 21 and the first pressure relief passage 121, to isolate one side of the cell bodies 21 from the first pressure relief passage 121, and the second sealing structures 35 are used for sealing between the cell bodies 21 and the second pressure relief passage 122, to isolate the other side of the cell bodies 21 from the second pressure relief passage 122.

The first sealing structure 34 and the second sealing structure 35 are provided between two adjacent cell bodies 21. In this way, the first sealing structure 34 can provide sealing between the cell bodies 21 and the first pressure relief passage 121, which improves the sealing performance between the cell bodies 21 and the first pressure relief passage 121. The second sealing structure 35 can provide sealing between the cell bodies 21 and the second pressure relief passage 122, which improves the sealing performance between the cell bodies 21 and the second pressure relief passage 122.

The first sealing structure 34 includes a first spacer 341 and a second spacer 342 which are spaced apart, and the second sealing structure 35 includes a third spacer 351 and a fourth spacer 352 which are spaced apart. A first filling passage is defined by the first spacer 341, the second spacer 342, and the two adjacent cell bodies 21, and a second filling passage is defined by the third spacer 351, the fourth spacer 352, and the two adjacent cell bodies 21. The first filling passage is filled with a sealant for sealing between the cell bodies 21 and the first pressure relief passage 121, and the second filling passage is filled with a sealant for sealing between the cell bodies 21 and the second pressure relief passage 122.

With this arrangement, the first sealing passage is filled with the sealant, which achieves the sealing between the cell bodies 21 and the first pressure relief passage 121. The second sealing passage is filled with the sealant, which achieves the sealing between the cell bodies 21 and the second pressure relief passage 122.

Specifically, the battery cell module 20 includes multiple cell bodies 21 arranged side by side in sequence. Multiple cell slots 16 are provided in a cavity of the housing 10. The cell slots 16 are arranged side by side. The cell bodies 21 are located in the cell slots 16. Each of the multiple cell bodies 21 is arranged in one corresponding cell slot 16.

With the multiple cell bodies 21 being arranged in one-to-one correspondence with the multiple cell slots 16, the stability during the installation of the cell bodies 21 is ensured.

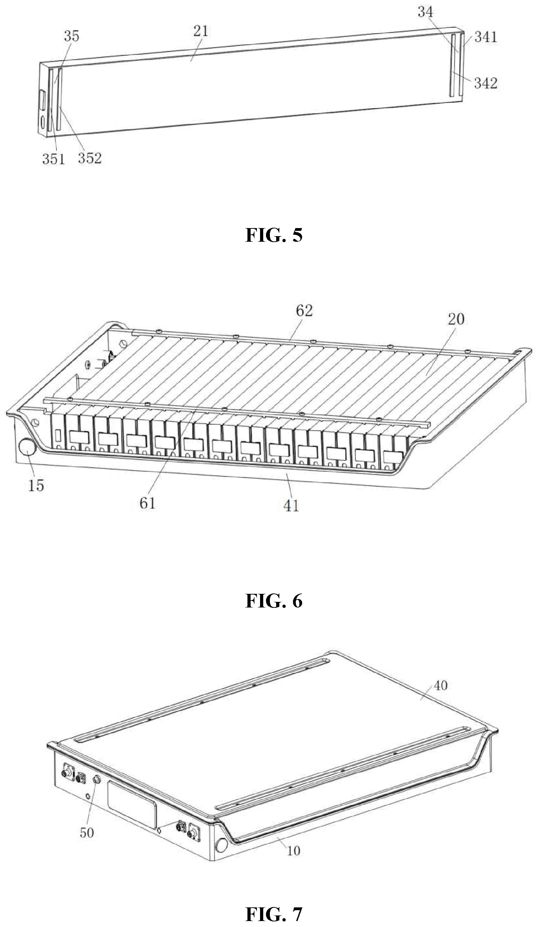

As shown in FIGS. 1 and 6, the housing 10 includes a case body 41 and a case cover 40 connected with each other. The sealing assembly 30 includes a sealing frame 31, a first sealing strip 32, and a second sealing strip 33. The first sealing strip 32 and the second sealing strip 33 are arranged on the sealing frame 31 and are spaced apart from each other. The first sealing strip 32 and the second sealing strip 33 are connected to two ends of the battery cell module 20 respectively. One end of the sealing frame 31 is connected to the case body 41, and the other end of the sealing frame 31 is connected to the case cover 40. The first sealing strip 32 is used for sealing between one side of the battery cell module 20 and the case cover 40, and the second sealing strip 33 is used for sealing between the other side of the battery cell module 20 and the case cover 40. The sealing frame 31 is used for sealing between the case cover 40 and the case body 41.

The sealing frame 31 is provided for sealing between the case cover 40 and the case body 41 along edges, which improves the sealing performance between the case cover 40 and the case body 41. The first sealing strip 32 is provided to ensure the sealing performance between the one side of the battery cell module 20 and the case cover 40. The second sealing strip 33 is provided to ensure the sealing performance between the other side of the battery cell module 20 and the case cover 40.

In this embodiment, the battery pack further includes a firefighting interface 50, which is provided on the housing 10. The firefighting interface 50 is in communication with the cavity of the housing 10 and is arranged directly facing the battery cell module 20. The firefighting interface 50 is used for cooling the battery cell module 20.

With this arrangement, in case of the thermal runaway of the battery cell module 20, a firefighting medium can be introduced via the firefighting interface 50 to directly cool the battery cell module 20, which effectively suppresses the spread of thermal runaway.

Specifically, the housing 10 includes a case body 41 and a case cover 40 connected with each other. The battery pack further includes a first cell restraint bar 61 and a second cell restraint bar 62. One side of the battery cell module 20 and the case body 41 are both connected to the first cell restraint bar 61, and the first cell restraint bar 61 presses against the one side of the battery cell module 20. The other side of the battery cell module 20 and the case body 41 are both connected to the second cell restraint bar 62, and the second cell restraint bar 62 presses against the other side of the battery cell module 20.

With this arrangement, the one side of the battery cell module 20 can be pressed by the first cell restraint bar 61, and the other side of the battery cell module 20 can be pressed by the second cell restraint bar 62, which improves the stability of the battery cell module 20. In this embodiment, the battery pack further includes a liquid cooling plate 63, which is arranged between the cavity of the housing 10 and the battery cell module 20. The liquid cooling plate 63 is used for dissipating the heat generated by the battery cell module 20.

With the liquid cooling plate 63, the heat generated by the battery cell module 20 can be dissipated, which ensures the normal operation of the battery cell module 20.

It should be noted that, the sealant is applied between the cell body 21 and the cell slot 16, between the cell body 21 and the first cell restraint bar 61, between the cell body 21 and the second cell restraint bar 62, and between the cell bodies 21.

Specifically, the housing 10 further includes a first baffle 17 and a second baffle 18, which are provided on the case body 41 and are space apart. The first cell restraint bar 61 is connected to the first baffle 17, and the second cell restraint bar 62 is connected to the second baffle 18. The first pressure relief passage 121 is defined by the one side of the battery cell module 20, the first baffle 17, and an inner side of a side wall at one side of the case body 41. The second pressure relief passage 122 is defined by the other side of the battery cell module 20, the second baffle 18, and an inner side of a side wall at the other side of the case body 41.

With this arrangement, the two ends of the battery cell module 20 can be clamped in the case body 41 by the first baffle 17 and the second baffle 18, which improves the stability of the installation of the battery cell module 20.

It should be noted that the terms used herein are only intended to describe specific embodiments and are not intended to limit the exemplary embodiments according to the present application. As used herein, unless otherwise explicitly stated in the context, the singular form is also intended to include the plural form. Additionally, it should be understood that when the terms "include" and/or "including" are used in this specification, they indicate the presence of features, steps, operations, devices, components, and/or combinations thereof.

Unless otherwise specified, the relative arrangement, numerical expressions, and values of the components and steps described in these embodiments do not limit the scope of the present application. In addition, it should be understood that for ease of description, the dimensions of the various parts shown in the accompany drawings are not drawn according to the actual proportional relationship. For technologies, methods, and equipment known to those skilled in the art, detailed discussions may not be made, but in appropriate circumstances, such technologies, methods, and equipment should be considered as part of the granted specification. In all the examples shown and discussed here, any specific value should be interpreted as merely illustrative rather than restrictive. Therefore, other examples of exemplary embodiments may have different values. It should be noted that similar labels and letters represent similar items in the accompany drawings. Therefore, once an item is defined in one figure, it does not need to be further illustrated in subsequent figures.

In the description of the present application, it should be understood that directional words such as "front, back, up, down, left, right", "lateral, vertical, perpendicular, horizontal", and "top, bottom" usually indicate directional or positional relationships based on the directional or positional relationships shown in the accompanying drawings, which is merely for the convenience of describing the present application and simplifying the description. Without contrary explanation, these directional words do not indicate or imply that the device or the component referred to must have a specific orientation or be constructed and operated in a specific orientation, and therefore cannot be understood as limiting the protection scope of the present application. The directional words "inside, outside" refer to the inside and outside relative to the contour of each component.

For ease of description, relative spatial terms such as "on", "above", "on the upper surface of", "upper", etc. can be used here to describe the spatial positional relationship between one device or feature and another device or feature shown in the figures. It should be understood that spatial relative terms are intended to encompass different orientations in use or operation in addition to the orientation of the device described in the figures. For example, if the device in the figure is inversely arranged, the device described as being "above other device or structure" or "on other device or structure" will be positioned as "below other device or structure" or "under other device or structure". Therefore, the exemplary term "above" can include two orientations: "above" and "below". The device can also be positioned in other different ways (by rotating 90 degrees or in other orientations), and corresponding explanations should be provided for the relative spatial description used here.

In addition, it should be noted that the words such as "first" and "second" used for defining components are only for the purpose of distinguishing the corresponding components. Unless otherwise stated, the above words do not have a special meaning and therefore cannot be understood as limiting the protection scope of the present application.

The above described embodiments are only preferred embodiments of the present application and are not intended to limit the present application. For those skilled in the art, the present application may have various modifications and variations. Any modifications, equivalent substitutions, improvements, etc. made within the spirit and principles of the present application shall be included within the protection scope of the present application.

## Claims

1. A battery pack, comprising:
a housing (10) having an accommodating space (11) and a pressure relief space (12);
a battery cell module (20); and
a sealing assembly (30), wherein
the battery cell module (20) is located inside the accommodating space (11), and the sealing assembly (30) seals a gap between the battery cell module (20) and the housing (10) and a gap between a side of the battery cell module (20) provided with a pressure relief valve and the pressure relief space (12);
the accommodating space (11) is isolated from the pressure relief space (12) by the battery cell module (20); and
the pressure relief space (12) is configured for discharging a combustible gas and a high-temperature electrolyte generated by the battery cell module (20) during thermal runaway.

2. The battery pack according to claim 1, wherein
the pressure relief space (12) comprises a first pressure relief passage (121) and a second pressure relief passage (122), and wherein
the first pressure relief passage (121) is formed between one side of the battery cell module (20) and an inner side of a side wall at one side of the housing (10), and the second pressure relief passage (122) is formed between another side of the battery cell module (20) and an inner side of a side wall at another side of the housing (10); and
the first pressure relief passage (121) and the second pressure relief passage (122) are both configured for discharging the combustible gas and the high-temperature electrolyte generated by the battery cell module (20) during the thermal runaway.

3. The battery pack according to claim 2, wherein
the two side walls of the housing (10) are opposite to each other and are provided with a first pressure relief hole and a second pressure relief hole, respectively, the first pressure relief hole is in communication with the first pressure relief passage (121), and the second pressure relief hole is in communication with the second pressure relief passage (122); and the first pressure relief hole and the second pressure relief hole are both configured for discharging the combustible gas generated by the battery cell module (20).

4. The battery pack according to claim 3, wherein
the housing (10) comprises a first drainage hole (13) and a second drainage hole (14), which are both provided at a bottom of the housing (10), the first drainage hole (13) is in communication with the first pressure relief passage (121), and the second drainage hole (14) is in communication with the second pressure relief passage (122); and the first drainage hole (13) and the second drainage hole (14) are both configured for discharging the high-temperature electrolyte generated by the battery cell module (20).

5. The battery pack according to claim 4, wherein
a housing pressure relief valve (15) is arranged at each of the first pressure relief hole and the second pressure relief hole, and a drainage valve is arranged at each of the first drainage hole (13) and the second drainage hole (14).

6. The battery pack according to claim 2, wherein
the battery cell module (20) comprises a plurality of cell bodies (21) arranged side by side in sequence, and the sealing assembly (30) comprises first sealing structures (34) and second sealing structures (35); and wherein
two ends of each of the plurality of cell bodies (21) are provided with the corresponding first sealing structure (34) and the corresponding second sealing structure (35) spaced apart and respectively, and the first sealing structure (34) and the second sealing structure (35) are located between two adjacent cell bodies (21); and
the first sealing structures (34) are configured for sealing between the plurality of cell bodies (21) and the first pressure relief passage (121), to isolate one side of the plurality of cell bodies (21) from the first pressure relief passage (121), and the second sealing structures (35) are configured for sealing between the plurality of cell bodies (21) and the second pressure relief passage (122), to isolate another side of the plurality of cell bodies (21) from the second pressure relief passage (122).

7. The battery pack according to claim 6, wherein
each of the first sealing structures (34) comprises a first spacer (341) and a second spacer (342) which are spaced apart, and each of the second sealing structures (35) comprises a third spacer (351) and a fourth spacer (352) which are spaced apart;
a first filling passage is defined by the first spacer (341), the second spacer (342), and the corresponding two adjacent cell bodies (21), and a second filling passage is defined by the third spacer (351), the fourth spacer (352), and the corresponding two adjacent cell bodies (21); and
a sealant is filled in the first filling passage for sealing between the two adjacent cell bodies (21) and the first pressure relief passage (121), and a sealant is filled in the second filling passage for sealing between the two adjacent cell bodies (21) and the second pressure relief passage (122).

8. The battery pack according to claim 1, wherein
the battery cell module (20) comprises a plurality of cell bodies (21) arranged side by side in sequence, a plurality of cell slots (16) are provided in a cavity of the housing (10), and the plurality of cell slots (16) are arranged side by side; and
the plurality of cell bodies (21) are arranged in the plurality of cell slots (16), and the plurality of cell bodies (21) are in one-to-one correspondence with the plurality of cell slots (16).

9. The battery pack according to claim 1, wherein
the housing (10) comprises a case body (41) and a case cover (40) connected with each other, and the sealing assembly (30) comprises a sealing frame (31), a first sealing strip (32), and a second sealing strip (33); and wherein
the first sealing strip (32) and the second sealing strip (33) are arranged on the sealing frame (31) and are spaced apart from each other, the first sealing strip (32) and the second sealing strip (33) are connected to two ends of the battery cell module (20), respectively, wherein one end of the sealing frame (31) is connected to the case body (41), and another end of the sealing frame (31) is connected to the case cover (40); and
the first sealing strip (32) is configured for sealing between one side of the battery cell module (20) and the case cover (40), the second sealing strip (33) is configured for sealing between another side of the battery cell module (20) and the case cover (40), and the sealing frame (31) is configured for sealing between the case cover (40) and the case body (41).

10. The battery pack according to claim 1, further comprising a firefighting interface (50) provided on the housing (10), wherein the firefighting interface (50) is in communication with the accommodating space (11), and the firefighting interface (50) is configured for cooling the battery cell module (20).

11. The battery pack according to claim 2, wherein
the housing (10) comprises a case body (41) and a case cover (40) connected with each other, and the battery pack further comprises a first cell restraint bar (61) and a second cell restraint bar (62), wherein
the one side of the battery cell module (20) and the case body (41) are both connected to the first cell restraint bar (61), and the first cell restraint bar (61) presses against the one side of the battery cell module (20); and
the another side of the battery cell module (20) and the case body (41) are both connected to the second cell restraint bar (62), and the second cell restraint bar (62) presses against the another side of the battery cell module (20).

12. The battery pack according to claim 11, wherein
the housing (10) further comprises a first baffle (17) and a second baffle (18), which are provided on the case body (41) and are space apart from each other;
the first cell restraint bar (61) is connected to the first baffle (17), and the second cell restraint bar (62) is connected to the second baffle (18); and
the first pressure relief passage (121) is defined by the one side of the battery cell module (20), the first baffle (17), and an inner side of a side wall at one side of the case body (41), and the second pressure relief passage (122) is defined by the another side of the battery cell module (20), the second baffle (18), and an inner side of a side wall at another side of the case body (41).
